Europäisches Patentamt

European Patent Office

Office européen des brevets

(19)

(11) Veröffentlichungsnummer: **0 214 388**
**B1**

(12) **EUROPÄISCHE PATENTSCHRIFT**

(45) Veröffentlichungstag der Patentschrift: **13.06.90**

(21) Anmeldenummer: **86108737.7**

(22) Anmeldetag: **26.06.86**

(51) Int. Cl.⁵: **B 60 G 11/10, F 16 F 1/36**

(54) Blattfeder.

(30) Priorität: **05.07.85 DE 3524077**

(43) Veröffentlichungstag der Anmeldung:
**18.03.87 Patentblatt 87/12**

(45) Bekanntmachung des Hinweises auf die
Patenterteilung:
**13.06.90 Patentblatt 90/24**

(84) Benannte Vertragsstaaten:
**AT BE DE FR GB IT NL SE**

(56) Entgegenhaltungen:
**EP-A-0 178 286**
**GB-A-1 203 386**
**GB-A-2 128 714**

**PATENTS ABSTRACTS OF JAPAN, Band 5, Nr.
170 (M-94)842r, 29. Oktober 1981; & JP-A-56 94
040 (NIPPON HATSUJIYOU K.K.) 30-07-1981**

(73) Patentinhaber: **KRUPP BRÜNINGHAUS GMBH
Plettenberger Strasse 12
D-5980 Werdohl (DE)**

(72) Erfinder: **VON Estorff, Eckart
Mallnitzer Strasse 10
D-5800 Hagen 1 (DE)**
Erfinder: **Wienand, Josef
Repkering 8
D-5980 Werdohl (DE)**

(74) Vertreter: **Cohausz & Florack Patentanwälte
Postfach 14 01 20 Schumannstrasse 97
D-4000 Düsseldorf 1 (DE)**

**Beschreibung**

Die Erfindung betrifft eine Blattfeder aus faserverstärktem duroplastischen Kunststoff, die mit dem Sattel einer Fahrzeugachse über Bridenschrauben oder -bügel und eine Spannplatte verspannt ist, wobei zwischen dem Achssattel und der Blattfeder, zwischen der Spannplatte und der Blattfeder sowie zwischen den einzelnen Blättern der Blattfeder Stützplatten angeordnet sind, deren Länge größer als die Länge des Achssattels bzw. der Spannplatte ist, und die im Bereich innerhalb der Briden direkt am faserverstärkten duroplastischen Kunststoff der Federblätter anliegen.

Bei solchen aus der GB-A-2 128 714 bekannten Federn besteht die Gefahr, daß es durch die hohen Drücke im Achseinspannbereich mit der Zeit zu Setzerscheinungen des Federpaketes und damit zum Lockern der Briden kommt. Außerdem können die Oberflächen der Federblätter im Fahrbetrieb beim Ein- und Ausfedern, Anfahren und Bremsen durch kleine Relativbewegungen zwischen den Federblättern und den Oberflächen der Spannelemente sowie auch zwischen den Federblättern untereinander an den Einspannungsrändern beschädigt werden.

Der Erfindung liegt daher die Aufgabe zugrunde, eine Blattfeder der eingangs genannten Art anzugeben, die es ermöglicht, die statischen und dynamischen Federkräfte und -momente von der Achse auf das Federblatt bzw. die Federblätter zu übertragen, ohne daß es zu Setzerscheinungen oder Beschädigungen des Federpaketes im Achseinspannbereich kommt. Auf diese Weise soll ein Lockern der Briden, ein Verschieben der Federblätter auf dem Achssattel und eine Zerstörung der Feder vermieden werden.

Diese Aufgabe wird erfindungsgemäß dadurch gelöst, daß in den Bereichen außerhalb der Briden die Stützplatten über Druckpolster aus gummielastischem Material mit den Oberflächen der Federblätter verbunden sind.

Dadurch, daß die Stützplatten im gesamten Bereich zwischen den Briden direkt am faserverstärkten duroplastischen Kunststoff anliegen, der insbesondere bei Vorhandensein eines gewissen Anteils quer zur Federlängsrichtung angeordneter Fasern sehr druckfest ist, wird die überhaupt zur Verfügung stehende Druckfläche für die Achseinspannung optimal genutzt, so daß ein Minimum an Relaxation der Kunststoffeder im Bereich ihrer Verspannung mit der Fahrzeugachse zu erwarten ist. Durch die Verlängerung der Stützplatten über den Achseinspannbereich hinaus wird eine größere Basis für Kräftepaare, resultierend aus Anfahr- und Bremsmomenten, und damit eine Verringerung der zusätzlich auf die Blattoberflächen an den Einspannungsrändern einwirkende Kräfte geschaffen. Durch das Zwischenschalten von Gummidruckpolstern wird vermieden, daß Relativbewegungen zwischen den Federblättern und den Stützplatten in Federlängsrichtung beim Ein- und Ausfedern zur Beschädigung der Blattoberflächen an den Einspannungsrändern führen.

Außerdem bewirken die Gummidruckpolster, daß die an den Einspannungsrändern auftretenden Kräfte gleichmäßiger verteilt in die Blattoberflächen eingeleitet werden und die Beweglichkeit der Blätter bei Hubfederung durch den verlängerten Achseinspannbereich nicht unnötig behindert wird.

Die zwischen Spannplatte und Blattfeder angeordnete Stützplatte ist bevorzugt an ihrer der Spannplatte zugewandten Seite im Bereich zwischen den Briden konvex ausgeführt. Sie weist also hier eine leichte Wölbung zur Spannplatte hin auf, so daß diese beim Anziehen der Bridenschrauben stärker auf den Mittelteil des Einspannbereiches drückt. Dadurch wird die Druckbelastung der Kunststoffeder im Achseinspannbereich gleichmäßiger auf die gesamte Druckfläche verteilt und auf das überhaupt mögliche Minimum reduziert. Insbesondere werden die Druckspitzen in den Bereichen unter den Briden verringert und somit Setzerscheinungen im Kunststoff vermieden, die zu einem Lockern der Verspannung mit dem Achssattel sowie als Folge davon zu einem Verschieben der Feder relativ zur Achse führen könnten.

Die Stützplatten können beispielsweise aus Metall oder faserverstärktem duroplastischen Kunststoff bestehen. Sie sind bevorzugt im Spannbereich innerhalb der Briden mit dem faserverstärkten Kunststoff der Federblätter festhaftend verbunden. Durch ein solches mit Hilfe von Klebung verursachtes Haften der Stützplatten an den Federblättern wird vor allem erreicht, daß das Federpaket als bauliche Einheit zusammengehalten wird und die Einzelteile relativ zueinander fixiert sind.

Bevorzugt sind die außerhalb der Briden angeordneten Gummidruckpolster mit den Stützplatten und den Federblattoberflächen durch Vulkanisation bzw. Klebung festhaftend verbunden, was ebenfalls zum Zusammenhalt des Federpaketes beiträgt. Wesentlicher ist jedoch, daß durch diese Maßnahmen die Druckfestigkeit der Gummipolster und damit ihre Wirksamkeit bei der Aufnahme von Kräften infolge von Anfahr- und Bremsmomenten erhöht wird. Die auftretenden Druckkräfte würden sonst mit der Zeit ein Herauskriechen des Gummis aus dem Bereich der Stützplatten bewirken.

Die zwischen den Stützplatten und den Oberflächen der Federblätter angeordneten Druckpolster sind bevorzugt vorgespannt. Die Vorspannung der Gummidruckpolster erhöht deren Wirksamkeit bei der Aufnahme von Kräften infolge von Anfahr- und Bremsmomenten. Sie entlastet und schützt damit gleichzeitig den faserverstärkten Kunststoff in den Bereichen unterhalb der Briden vor Beschädigung.

Der faserverstärkte duroplastische Kunststoff der Federblätter ist bevorzugt als die statischen und dynamischen Federkräfte und -momente aufnehmendes tragendes Laminat ausgebildet. An der Ober- und Unterseite des tragenden Laminates der Federblätter sind bevorzugt im Bereich der Verspannung mit dem Achssattel nichttragende Schutzschichten angeordnet, die ebenfalls aus faserverstärktem duroplastischen Kunststoff bestehen.

Die Abdeckung des tragenden, im wesentlichen längsorientierten Laminates der Federblätter im Bereich der Achseinspannung durch nichttragende Schutzschichten aus faserverstärktem Kunststoff ist vor allem erforderlich, wenn aus fertigungstechnischen, optischen oder Haltbarkeitsgründen thermoplastische Deckschichten vorhanden sind, die zur Erhöhung der Druckfestigkeit des Federpaketes im Bereich innerhalb der Briden beispielsweise durch Fräsen entfernt werden sollen, ohne daß dabei das tragende Laminat beschädigt wird. Dabei können die Schutzschichten zur Erzielung der nötigen Druckfestigkeit beispielsweise durch Kurzfasern oder durch vorwiegend quer bzw. unter 45° zur Federlängsrichtung kreuzweise angeordnete Langfasern verstärkt sein. Außerdem werden die Druckkräfte der Brideneinspannung durch das Zwischenschalten von nicht an der Federarbeit beteiligten Schutzschichten aus Faserverbundwerkstoff noch gleichmäßiger verteilt und damit noch schonender in das tragende Laminat eingeleitet. Dieser Effekt kann durch vollständiges oder teilweises Auffüllen der abgefrästen Schichten mit nichttragendem faserverstärkten Kunststoff noch intensiviert werden. Schließlich werden so auch kleinste Längsverschiebungen zwischen den Stützplatten und dem tragenden Laminat, die auch bei noch so fester Verspannung des Federpaketes mit dem Achssattel beim Ein- und Ausfedern am Rande des direkten Einspannbereichs unterhalb der Briden auftreten und die hoch beanspruchten Randfasern des tragenden Laminats zerstören könnten, vermieden.

Die Herstellung einer erfindungsgemäßen Blattfeder erfolgt also bevorzugt dadurch, daß zunächst im Spannbereich innerhalb der Briden die an der Ober- und Unterseite der Federblätter durchgehend vorhandenen thermoplastischen Deckschichten ganz und die faserverstärkten, duroplastischen Schutzschichten teilweise durch Fräsen entfernt, sowie ggf. durch Einkleben von Faserverbundwerkstoff wieder verstärkt werden, und daß anschließend die Stützplatten mit den bereits anvulkanisierten bzw. angeklebten Druckpolstern aus gummielastischem Material durch Klebung mit den Federblättern verbunden werden.

Durch das Abfräsen der thermoplastischen Deckschicht und eines Teils der faserverstärkten duroplastischen Schutzschicht in einer Länge, die derjenigen des dem Federblatt zugewandten Teils der jeweiligen Stützplatte entspricht, wird zusätzlich zu den übrigen Vorteilen dieser Maßnahme auch noch ein gewisser Formschluß zwischen den Federblättern und den Einspannteilen erreicht, was vorteilhaft für die Zentrierung und die Fixierung des Federpaketes auf dem Achssattel ist.

Dabei braucht das tragende Laininat nicht angebohrt zu werden, was sich vorteilhaft auf die Lebensdauer der Blattfeder aus faserverstärktem Kunststoff auswirkt.

Ausführungsformen der Erfindung sind in den Schutzansprüchen enthalten. Der Schutzumfang erstreckt sich nicht nur auf die beanspruchten Einzelmerkmale, sondern auch auf deren Kombination, Ausführungsbeispiele der Erfindung sind in der Zeichnung dargestellt und werden im folgenden näher beschrieben.

Es zeigen:

Fig. 1 die Seitenansicht einer Einblattfeder aus faserverstärktem Kunststoff, welche die erfindungsgemäße Verbindung mit der Fahrzeugachse aufweist;

Fig. 2 einen Längsschnitt in vergrößertem Maßstab durch den erfindungsgemäßen Achseinspannungsbereich einer Zweiblattfeder aus faserverstärktem Kunststoff, wobei das Federpaket von einem Hauptfederblatt und einem Zusatzfederblatt gebildet wird.

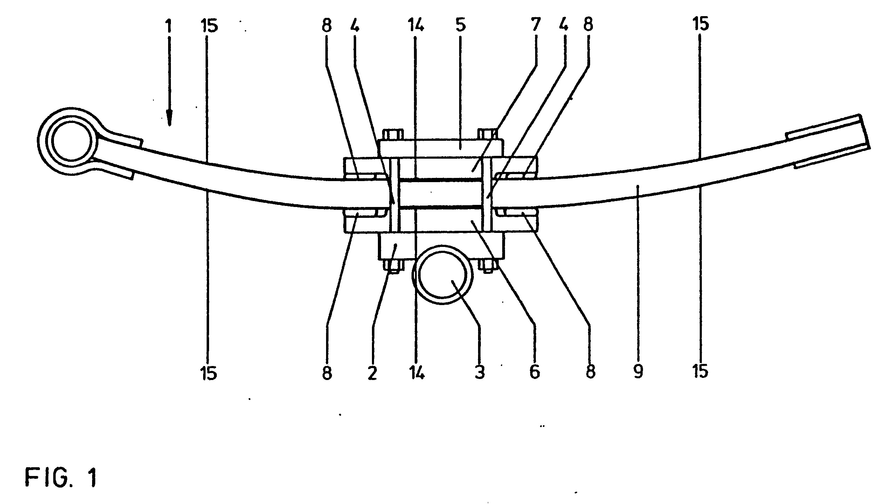

Die Einblattfeder 1 gemäß Fig. 1 der Zeichnung ist mit Hilfe eines Achssattels 2 auf einer Fahrzeugachse 3 angeordnet. Zur Befestigung der Einblattfeder 1 auf dem Achssattel 2 dienen Briden 4 in Form von Schrauben, die durch fluchtende Bohrungen des Achssattels 2 und einer darüber angeordneten Spannplatte 5 hindurchgesteckt und mittels aufgeschraubter Muttern befestigt sind. Zwischen dem Achssattel 2 und der Einblattfeder 1 ist eine auf dem Achssattel 2 aufliegende untere Stützplatte 6 angeordnet, während zwischen der Einblattfeder 1 und der Spannplatte 5 eine auf der Einblattfeder aufliegende obere Stützplatte 7 angeordnet ist.

Die Stützplatten 6 und 7 sind in Federlängsrichtung länger ausgeführt als der Achssattel 2 und die Spannplatte 5. Sie liegen im Bereich innerhalb der Briden 4 direkt am faserverstärkten Kunststoff der Einblattfeder 1 an. Außerhalb der Briden 4 befinden sich zwischen den hier etwas dünner als innerhalb der Briden 4 ausgeführten Stützplatten 6 und 7 einerseits und der unteren bzw. oberen Oberfläche der Einblattfeder 1 andererseits jeweils Druckpolster 8 aus einem gummielastischen Material, die vorgespannt sein können.

Die Einblattfeder 1 besteht im wesentlichen aus einem tragenden Laminat 9 aus faserverstärktem duroplastischen Kunststoff, welches die statischen und dynamischen Federkräfte und -momente aufnimmt. An der Ober- und Unterseite des tragenden Laminates 9 ist jeweils im Bereich der Verspannung mit dem Achssattel 2 eine nichttragende Schutzschicht 14 angeordnet, die ebenfalls aus faserverstärktem duroplastischen Kunststoff besteht. Außerhalb der Briden 4 ist der faserverstärkte duroplastische Kunststoff des Laminates 9 mit einer oberen und einer unteren nichttragenden Deckschicht 15 aus einem weicheren, thermoplastischen Kunststoff abgedeckt.

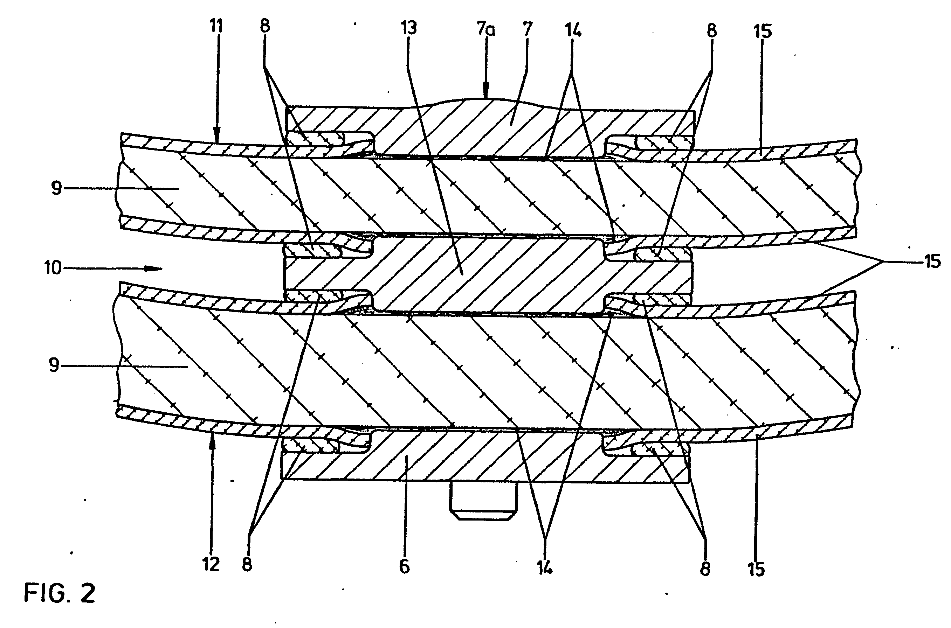

Die Blattfeder gemäß Fig. 2 der Zeichnung ist als Zweiblattfeder 10 mit einem Hauptfederblatt 11 und einem darunter angeordneten Zusatzfederblatt 12 ausgebildet, wobei jedes Federblatt wieder im wesentlichen aus dem tragenden Laminat 9 und den darauf bzw. darunter befindlichen Schutzschichten 14 im Bereich der Verspannung mit dem Achssattel und den Deckschichten 15 außerhalb der Verspannung mit dem Achssattel ausgeführt ist.

Die tragenden Laminate 9 und die Deckschichten 15 haben jeweils denselben Aufbau wie bei dem Ausführungsbeispiel gemäß Fig. 1 der Zeichnung. Dagegen sind die Schutzschichten 14 nach ihrem teilweisen Abfräsen, wobei auch die Deckschichten 15 im Bereich innerhalb der Briden entfernt wurden, nicht wieder mit Faserverbundwerkstoff aufgefüllt worden und daher entsprechend dünner.

Die Ausführung als Zweiblattfeder 10 bedingt, daß außer der unteren Stützplatte 6 und der oberen Stützplatte 7 eine zusätzliche mittlere Stützplatte 13 vorgesehen ist, die sich zwischen dem Hauptfederblatt 11 und dem Zusatzfederblatt 12 befindet. In den Bereichen außerhalb der Briden sind die Federblätter 11 und 12 über Druckpolster 8 aus gummielastischem Material mit der mittleren Stützplatte 13 verbunden, wobei die Druckpolster 8 vorgespannt sein können. Die Stützplatten 6, 7 und 13 weisen außerhalb der Briden Ausnehmungen auf, in denen die Druckfedern 8 angeordnet sind.

Bei diesem Ausführungsbeispiel ist die obere Stützplatte 7 an ihrer oberen Seite 7a, mit welcher sie an der Spannplatte anliegt, im Bereich zwischen den Briden konvex ausgeführt, weist hier also eine leichte Wölbung zur Spannplatte hin auf.

**Patentansprüch**

1. Blattfeder aus faserverstärktem duroplastischen Kunststoff, die mit dem Sattel einer Fahrzeugachse über Bridenschrauben oder -bügel und eine Spannplatte verspannt ist, wobei zwischen dem Achssattel (2) und der Blattfeder (1, 10), zwischen der Spannplatte (5) und der Blattfeder (1, 10) sowie zwischen den einzelnen Blättern (11, 12) der Blattfeder (10) Stützplatten (6, 7, 13) angeordnet sind, deren Länge größer als die Länge des Achssattels (2) bzw. der Spannplatte (5) ist, und die im Bereich innerhalb der Briden (4) direkt am faserverstärkten duroplastischen Kunststoff der Federblätter (1, 11, 12) anliegen, dadurch gekennzeichnet, daß in den Bereichen außerhalb der Briden (4) die Stützplatten (6, 7, 13) über Druckpolster (8) aus gummielastischem Material mit den Oberflächen der Federblätter (1, 11, 12) verbunden sind.

2. Blattfeder nach Anspruch 1, dadurch gekennzeichnet, daß die zwischen Spannplatte (5) und Blattfeder (1, 10) angeordnete Stützplatte (7) an ihrer der Spannplatte (5) zugewandten Seite (7a) im Bereich zwischen den Briden (4) konvex ausgeführt is.

3. Blattfeder nach den Ansprüchen 1 und 2, dadurch gekennzeichnet, daß die Stützplatten (6, 7, 13) aus Metall bestehen.

4. Blattfeder nach den Ansprüchen 1 und 2, dadurch gekennzeichnet, daß die Stützplatten (6, 7, 13) aus faserverstärktem duroplastischen Kunststoff bestehen.

5. Blattfeder nach den Ansprüchen 1 bis 4, dadurch gekennzeichnet, daß die Stützplatten (6, 7, 13) im Spannbereich innerhalb der Briden (4) mit dem faserverstärkten Kunststoff (9 bzw. 14) der Federblätter (1, 11, 12) festhaftend verbunden sind.

6. Blattfeder nach den Ansprüchen 1 bis 5, dadurch gekennzeichnet, daß die Stützplatten (6, 7, 13) mit den in ihren Bereichen außerhalb der Briden (4) angeordneten Druckpolstern (8) festhaftend verbunden sind.

7. Blattfeder nach den Ansprüchen 1 bis 6, dadurch gekennzeichnet, daß die Druckpolster (8) an ihren einem Federblatt (1, 11, 12) zugewandten Seiten mit der Oberfläche des betreffenden Federblattes (1, 11, 12) festhaftend verbunden sind.

8. Blattfeder nach den Ansprüchen 1 bis 7, dadurch gekennzeichnet, daß die zwischen den Stützplatten (6, 7, 13) und den Oberflächen der Federblätter (1, 11, 12) angeordneten Druckpolster (8) vorgespannt sind.

9. Blattfeder nach den Ansprüchen 1 bis 8, dadurch gekennzeichnet, daß der faserverstärkte duroplastische Kunststoff der Federblätter (1, 11, 12) als die statischen und dynamischen Federkräfte und -momente aufnehmendes tragendes Laminat (9) ausgebildet ist.

10. Blattfeder nach den Ansprüchen 1 bis 9, dadurch gekennzeichnet, daß an der Ober- und Unterseite des tragenden Laminates (9) der Federblätter (1, 11, 12) im Bereich der Verspannung mit dem Achssattel (2) nichttragende Schutzschichten (14) angeordnet sind, die ebenfalls aus faserverstärktem duroplastischen Kunststoff bestehen.

11. Blattfeder nach den Ansprüchen 1 bis 10, dadurch gekennzeichnet, daß der faserverstärkte duroplastische Kunststoff der Federblätter (1, 11, 12) im Bereich außerhalb der Briden (4) mit einer oberen und einer unteren nichttragenden Deckschicht (15) aus einem weicheren, thermoplastischen Kunststoff abgedeckt ist.

12. Verfahren zur Herstellung einer Blattfeder nach den Ansprüchen 1 bis 11, dadurch gekennzeichnet, daß zunächst im Spannbereich innerhalb der Briden (4) die an der Ober- und Unterseite der Federblätter (1, 11, 12) durchgehend vorhandenen thermoplastischen Deckschichten (15) ganz und die faserverstärkten, duroplastischen Schutzschichten (14) teilweise durch Fräsen entfernt sowie ggf. durch Einkleben von Faserverbundwerkstoff wieder verstärkt werden, und daß anschließend die Stützplatten (6, 7, 13) mit den bereits anvulkanisierten bzw. angeklebten Druckpolstern (8) aus gummielastischem Material durch Klebung mit den Federblättern (1, 11, 12) verbunden werden.

**Revendications**

1. Ressort à lames en matière synthétique thermodurcissable renforcée par des fibres, qui est croisaillonné avec l'attelage d'un axe de véhicule par l'intermédiaire de vis ou d'étriers à bride et un plateau de serrage, caractérisé en ce que des plaques d'appui (6, 7, 13) sont disposées entre l'attelage d'axe (2) et le ressort à lames (1, 10), entre le plateau de serrage (5) et le ressort à lames (1, 10), ainsi qu'entre les lames individuelles (11, 12) du ressort à lames (10), dont la longueur est supérieure à la longueur de l'attelage d'axe (2) ou du plateau de serrage (5), et qui sont directement adjacentes dans la zone intérieure aux brides (4) à la matière synthétique thermodurcissable renforcée par des fibres des lames de ressorts (1, 11, 12), et sont, dans les zones en dehors des brides (4), reliées aux surfaces des lames de ressort (1, 11, 12) par l'intermédiaire de rembourrages de pression (8) en matériau élastique du type caoutchouc.

2. Ressort à lames selon la revendication 1, caractérisé en que la plaque d'appui (7) disposée entre le plateau de serrage (5) et la lame de ressort (1, 10), est réalisée convexe entre les brides (4) sur sa face (7a) tournée vers le plateau de serrage (5).

3. Ressort à lames selon les revendications 1 et 2, caractérisé en ce que les plaques d'appui (6, 7, 13) sont réalisées en métal.

4. Ressort à lames selon les revendications 1 et 2, caractérisé en ce que les plaques d'appui (6, 7, 13) sont constituées en matière synthétique thermoplastique renforcée par des fibres.

5. Ressort à lames selon les revendications 1 à 4, caractérisé en ce que les plaques d'appui (6, 7, 13) sont, dans la région de serrage à l'intérieur des brides (4), reliées adhérentes à la matière synthétique renforcée par des fibres (9 ou 14) des lames de ressort (1, 11, 12).

6. Ressort à lames selon les revendications 1 à 5, caractérisé en ce que les plaques d'appui (6, 7, 13) sont reliées adhérentes aux rembourrages en caoutchouc (8) disposés dans leurs régions en dehors des brides (4).

7. Ressort à lames selon les revendications 1 à 6, caractérisé en ce que les rembourrages en caoutchouc (8) sont reliés adhérents, sur leurs faces tournées vers une lame de ressort (1, 11, 12), à la surface de la lame de ressort (1, 11, 12) correspondante.

8. Ressort à lames selon les revendications 1 à 7, caractérisé en ce que les rembourrages en caoutchouc (8) disposés entre les plaques d'appui (6, 7, 13) et les surfaces des lames de ressort (1, 11, 12) sont précontraints.

9. Ressort à lames selon les revendications 1 à 8, caractérisé en ce que la matière synthétique thermodurcissable renforcée par des fibres des lames de ressort (1, 11, 12) est constituée sous forme de stratifié (9) porteur absorbant les forces et moments de ressort statiques et dynamiques.

10. Ressort à lames selon les revendications 1 à 9, caractérisé en ce que des couches de protection (14) non porteuses sont disposées sur les faces supérieure et inférieure du stratifié (9) porteur des lames de ressort (1, 11, 12) dans la région de croisillonnement avec l'attelage d'axe (2), qui sont également constituées en matière synthétique thermodurcissable renforcée par des fibres.

11. Ressort à lames selon les revendications 1 à 10, caractérisé en ce que la matière synthétique thermodurcissable renforcée par des fibres des lames de ressort (1, 11, 12) est recouverte, dans la région en dehors des brides (4), par des couches de couverture supérieure et inférieure (15) non porteuses en une matière synthétique thermoplastique plus molle.

12. Procédé de fabrication d'un ressort à lames selon les revendications 1 à 11,

caractérisé en ce que, d'abord, dans la région de serrage à l'intérieur des brides (4), les couches de couverture (15) thermoplastiques disponibles traversantes sur les faces supérieure et inférieure des lames de ressort (1, 11, 12), sont complètement supprimées et les couches de protection (14) thermodurcissables renforcées par des fibres, sont partiellement supprimées par fraisage et sont également le cas échéant renforcées à nouveau par collage d'un matériau composite de fibres, et qu'ensuite les plaques d'appui (6, 7, 13) sont reliées par collage aux lames de ressort (1, 11, 12) avec les rembourrages de pression (8) en matériau élastique du type caoutchouc déjà fixés par vulcanisation ou par collage.

**Claims**

1. A leaf spring of fibre-reinforced thermosetting plastics which is clamped to the saddle of a vehicle axle via screwthreaded or bowed shackles and a clamping plate, characterized in that disposed between the axle saddle (2) and the leaf spring (1, 10), between the clamping plate (5) and the leaf spring (1, 10), and between the individual leaves (11, 12) of the leaf spring (10) are supporting plates (6, 7, 13) whose length is greater than the length of the axle saddle (2) and the clamping plate (5) and which bear directly against the fibre-reinforced thermosetting plastics of the spring leaves (1, 11, 12) in the zone inside the shackles (4), but are connected via air-cushions (8) of rubber-elastic material to the surfaces of the spring leaves (1, 11, 12) in the zones outside the shackles (4).

2. A leaf spring according to claim 1, characterized in that the supporting plate (7) disposed between the clamping plate (5) and the leaf spring (1, 10) is constructed convex on its side (7a) adjacent the clamping plate (5) in the zone between the shackles (4).

3. A leaf spring according to claims 1 and 2, characterized in that the supporting plates (6, 7, 13) are made of metal.

4. A leaf spring according to claims 1 and 2, characterized in that the supporting plates (6, 7, 13) are made of fibre-reinforced thermosetting plastics.

5. A leaf spring according to claims 1 to 4, characterized in that the supporting plates (6, 7, 13) are connected firmly adhering to the fibre-reinforced plastics (9; 14) of the spring leaves (1, 11, 12) in the clamping zone inside the shackles (4).

6. A leaf spring according to claims 1 to 5, characterized in that the supporting plates (6, 7, 13) are connected firmly adhering to the pressure cushions (8) disposed in their zones outside the shackles (4).

7. A leaf spring according to claims 1 to 6, characterized in that on their sides adjacent a spring leaf (1, 11, 12) the pressure cushions (8) are connected firmly adhering to the surface of the particular spring leaf (1, 11, 12).

8. A leaf spring according to claims 1 to 7, characterized in that the pressure cushions (8) disposed between the supporting plates (6, 7, 13) and the surfaces of the spring leaves (1, 11, 12) are prestressed.

9. A leaf spring according to claims 1 to 8, characterized in that the fibre-reinforced thermosetting plastics of the spring leaves (1, 11, 12) is constructed in the form of a supporting laminate (9) absorbing the static and dynamic spring forces and moments.

10. A leaf spring according to claims 1 to 9, characterized in that non-supporting protective layers (14) also made of fibre-reinforced thermosetting plastics are disposed on the top and bottom sides of the supporting laminate (9) of the spring leaves (1, 11, 12) in the zone of clamping to the axle saddle (2).

11. A leaf spring according to claims 1 to 10, characterized in that the fibre-reinforced thermosetting plastics of the spring leaves (1, 11, 12) is covered in the zone outside the shackles (4) with a top and bottom non-supporting covering layer (15) of a softer, thermoplastic plastics.

12. A process for the production of a leaf spring according to claims 1 to 11, characterized in that in the clamping zone inside the shackles (4) first the thermoplastic covering layers (15) present continuously on the top and bottom sides of the spring leaves (1, 11, 12) are completely, and the fibre-reinforced thermosetting plastics protective layers (14) are partially removed by milling and if necessary again reinforced by the gluing-in of fibre composite, and then the supporting plates (6, 7, 13) are connected to the pressure cushions (8) of rubber-elastic material already vulcanized or glued on, by gluing to the spring leaves (1, 11, 12).

FIG. 1

FIG. 2